# EUROPEAN PATENT APPLICATION

(11) **EP 4 738 002 A1**
(43) Date of publication of application: **06.05.2026**
(21) Application number: 24830379.4
(22) Date of filing: 30.05.2024
(51) Int. Cl.: G03B 9/06, G03B 9/08

(54) **VARIABLE APERTURE DEVICE, CAMERA MODULE AND ELECTRONIC DEVICE**

(30) Priority: 30.06.2023 CN 202310802495
(71) Applicant: Huawei Technologies Co., Ltd., Shenzhen, Guangdong 518129 (CN)
(72) Inventor: HONG, Nan, Shenzhen, Guangdong 518129 (CN); KUO, Li-Te, Shenzhen, Guangdong 518129 (CN); FU, Qianyan, Shenzhen, Guangdong 518129 (CN); LONG, Sichen, Shenzhen, Guangdong 518129 (CN)
(74) Representative: Pfenning, Meinig & Partner mbB
(86) International application number: PCT/CN2024/096392
(87) International publication number: WO 2025/001732

(57) **Abstract**

A variable aperture apparatus (32), a camera module (30), and an electronic device (100) are provided, and relate to the field of image shooting technologies. The variable aperture apparatus (32) includes: a base (1); a carrier (2); and a plurality of aperture blades (4) and a shutter blade (5). When the carrier (2) rotates relative to the base (1), the plurality of aperture blades (4) and the shutter blade (5) slide relative to the carrier (2), and rotate relative to the base (1); and movement positions of the plurality of aperture blades (4) include a first position and a second position, a light inlet hole (32a) enclosed by the plurality of aperture blades (4) becomes larger when the plurality of aperture blades (4) move from the first position to the second position, the shutter blade (5) completely blocks the light inlet hole (32a) at the first position, and the shutter blade (5) deviates from the light inlet hole (32a) at the second position. A global shutter is implemented through cooperation of the plurality of aperture blades (4) and the shutter blade (5).

## Description

This application claims priority to Chinese Patent Application No. 202310802495.9, filed with the China National Intellectual Property Administration on June 30, 2023 and entitled "VARIABLE APERTURE APPARATUS, CAMERA MODULE, AND ELECTRONIC DEVICE", which is incorporated herein by reference in its entirety.

### TECHNICAL FIELD

This application relates to the field of electronic device image shooting technologies, and in particular, to a variable aperture apparatus, a camera module having the variable aperture apparatus, and an electronic device including the camera module.

### BACKGROUND

A shutter is a structure used by an image shooting device to control exposure time of a photosensitive element. Exposure modes include a rolling shutter (Rolling Shutter) and a global shutter (Total Shutter).

In an existing electronic device, for example, a mobile phone, an electronic shutter is used to implement the rolling shutter, and the rolling shutter is performed through progressive scanning and exposing until all pixels are exposed.

However, if a shoot object moves at a high speed or vibrates quickly relative to the image shooting device, an electronic shutter manner of controlling the rolling shutter is used for shooting. Because a progressive scanning speed is insufficient, a shooting result may be "skew", "wobble", or "partial exposure". A phenomenon that occurs in this rolling shutter mode for shooting is defined as a jello effect.

In addition, in indoor lighting, preview and video recording are prone to a time-domain aliasing phenomenon caused by interaction between a 50 Hz or 60 Hz power frequency and a rolling shutter mechanism, resulting in a banding (Banding) phenomenon.

On the contrary, the global shutter uses a feature of simultaneously exposing all pixels to compensate for the foregoing phenomena such as the jello effect and the banding and flicker phenomenon. For example, a mechanical shutter that can implement the global shutter is usually integrated into the image shooting device, but the technologies may lead to problems such as a significant increase in a device size and a significant increase in costs.

### SUMMARY

This application provides a variable aperture apparatus, a camera module having the variable aperture apparatus, and an electronic device including the camera module. A main purpose is to integrate a mechanical shutter that can control a global shutter into a structure of the variable aperture apparatus. In this way, a significant increase in a device size and a significant increase in costs are not caused due to introduction of the mechanical shutter.

To achieve the foregoing objectives, the following technical solutions are used in embodiments of this application.

According to one aspect, this application provides a variable aperture apparatus. For example, the variable aperture apparatus may be applied to an electronic device having a photographing or video shooting function.

The variable aperture apparatus includes a base; a carrier; and a plurality of aperture blades and at least one shutter blade, where the carrier is rotatably connected to the base, the plurality of aperture blades are disposed around a circumference of the carrier, and are configured to enclose a light inlet hole, the plurality of aperture blades and the at least one shutter blade are rotatably connected to the base, and the plurality of aperture blades and the at least one shutter blade are slidably connected to the carrier; when the carrier rotates relative to the base, the plurality of aperture blades and the at least one shutter blade slide relative to the carrier, and rotate relative to the base, and the plurality of aperture blades rotate relative to the base, and slide relative to the carrier, to adjust a size of the light inlet hole; and movement positions of the plurality of aperture blades include a first position and a second position, the light inlet hole enclosed by the plurality of aperture blades becomes larger when the plurality of aperture blades move from the first position to the second position, the at least one shutter blade completely blocks the light inlet hole at the first position, and the at least one shutter blade deviates from the light inlet hole at the second position. Alternatively, the light inlet hole enclosed by the plurality of aperture blades may become smaller when the plurality of aperture blades moves from the second position to the first position; the at least one shutter blade deviates from the light inlet hole at the second position, so that the light inlet hole can receive external light; and the at least one shutter blade blocks the light inlet hole at the first position, so that the light inlet hole cannot receive the external light.

The variable aperture apparatus provided in this application not only includes the plurality of aperture blades that can adjust a size of the light inlet hole, but also includes the shutter blade that can move with the aperture blade. When the aperture blade and the shutter blade move, and the light inlet hole becomes larger at a specific stage, for example, when the plurality of aperture blades move to the first position, the shutter blade may block the light inlet hole; and when the plurality of aperture blades move to the second position, the shutter blade that blocks the light inlet hole may deviate from the light inlet hole, so that the light inlet hole is exposed and unblocked. In this way, the shutter blade moves from the first position to the second position, so that a global shutter can be implemented. The shutter blade may be referred to as a mechanical shutter that can implement the global shutter.

In this application, the mechanical shutter that implements the global shutter is integrated into a structure of the variable aperture apparatus that can adjust the size of the aperture, and the global shutter is implemented through cooperation of the plurality of aperture blades and the shutter blade. The variable aperture apparatus in this application not only can maintain a variable aperture function, but also can be used as the mechanical shutter to control the global shutter. In this way, in the solution of this application, a significant increase in a device size and a significant increase in costs are not caused due to addition of the shutter blade that can control the global shutter.

In a possible implementation, the first position is a position at which the plurality of aperture blades enclose a minimum light inlet hole.

In a possible implementation, the second position includes a position at which the plurality of aperture blades enclose a maximum light inlet hole.

For example, in a process in which the plurality of aperture blades adjust an aperture hole from a maximum aperture hole to a minimum aperture hole, the shutter blade deviates from the aperture hole and does not block the aperture hole, which does not affect a continuous variable aperture function. Only when the shutter blade is in the minimum light inlet hole, the shutter blade blocks the minimum light inlet hole. In this example, although the mechanical shutter for controlling the global shutter is integrated with the variable aperture apparatus, functions of the mechanical shutter and the variable aperture apparatus are independent of each other and do not affect each other.

In a possible implementation, the at least one shutter blade includes a first shutter blade, and the first shutter blade has a first side edge and a second side edge. The plurality of aperture blades include a first aperture blade, and the first aperture blade has a third side edge and a fourth side edge. When the plurality of aperture blades move to the second position, the first side edge is closer to a center of the light inlet hole than the second side edge, and the third side edge is closer to the center of the light inlet hole than the fourth side edge. The movement positions of the plurality of aperture blades further include a third position between the first position and the second position. When the plurality of aperture blades move from the first position to the third position, the first side edge intersects with the third side edge; and when the plurality of aperture blades move from the first position to the third position, a movement speed of the first shutter blade is greater than a movement speed of the first aperture blade.

It may be considered that after an edge of the shutter blade intersects with an edge of the aperture blade, the movement speed of the shutter blade is greater than the movement speed of the aperture blade, to quickly block the light inlet hole or quickly expose the light inlet hole.

In a possible implementation, the variable aperture apparatus further includes a drive apparatus, where the drive apparatus is connected to the base and the carrier, and the drive apparatus is configured to drive the carrier to rotate relative to the base, to drive the plurality of aperture blades and the at least one shutter blade to move.

A same drive apparatus is used, to implement synchronous start and stop of the aperture blade and the shutter blade. On a basis of implementing the variable aperture apparatus and the global shutter, this application uses a drive apparatus, and does not need to separately design a drive structure for driving movement of the shutter blade. In this way, in this application, a structure can be simplified, thereby implementing miniaturization, and lightness and thinness of a device.

In a possible implementation, the drive apparatus includes a coil and a magnet, where one of the coil and the magnet is disposed on the carrier, and the other is disposed on the base.

In an example, when the coil is disposed on the base, the magnet is disposed on the carrier; or in another example, when the magnet is disposed on the carrier, the coil is disposed on the base.

In a possible implementation, the at least one shutter blade includes the first shutter blade and a second shutter blade; the first shutter blade includes a first contact surface, and the second shutter blade includes a second contact surface; and when the plurality of aperture blades move from the second position to the first position, the first contact surface and the second contact surface are close to each other, and the first contact surface and the first contact surface are in contact at the first position, so that the first shutter blade and the second shutter blade block the light inlet hole.

In the implementation structure, not only the first shutter blade is included, but also the second shutter blade is included. At the first position, the aperture hole is blocked through cooperation of the first shutter blade and the second shutter blade.

In a possible implementation, the at least one shutter blade includes the first shutter blade and a second shutter blade; the first shutter blade and the second shutter blade are sequentially disposed in a direction consistent with an axial direction of the light inlet hole; and when the plurality of aperture blades move to the first position, an orthographic projection of the first shutter blade on the second shutter blade at least partially overlaps the second shutter blade.

The light inlet hole is blocked by using an overlapped part of the first shutter blade and the second shutter blade.

In a possible implementation, in addition to the first shutter blade and the second shutter blade, more shutter blades are further included, and these shutter blades are disposed around the circumference of the carrier.

In a possible implementation, the plurality of aperture blades include a first group of aperture blades and a second group of aperture blades, and both the first group of aperture blades and the second group of aperture blades include a plurality of aperture blades; the first group of aperture blades and the second group of aperture blades are disposed in a stacked manner in a direction consistent with the axial direction of the light inlet hole; and in a movement process of the plurality of aperture blades, there is a gap between every two adjacent aperture blades in the first group of aperture blades, and an aperture blade that is in the second group of aperture blades and that is opposite to the gap blocks the gap.

In this example, rotation and sliding of the first group of aperture blades and the second group of aperture blades that are stacked are used to enclose the light inlet hole. In addition, in the movement process of the first group of aperture blades and the second group of aperture blades, an aperture blade in the second group of aperture blades blocks the gap. In this way, in an aperture adjustment process, there is no gap between the aperture blades, thereby preventing light from entering through the gap and affecting performance of the camera module.

In a possible implementation, the aperture hole enclosed by the plurality of aperture blades has a light inlet side and a light outlet side, and the first group of aperture blades is closer to the light inlet side than the second group of aperture blades; and the at least one shutter blade is disposed between the first group of aperture blades and the second group of aperture blades; or the at least one shutter blade is disposed on a side that is of the first group of aperture blades and that is close to the light inlet side; or the at least one shutter blade is disposed on a side that is of the second group of aperture blades and that is close to the light outlet side.

The foregoing provides three different positions for disposing the shutter blade. One is disposed between the first group of aperture blades and the second group of aperture blades, which may be understood as being centrally disposed; one is disposed close to the light inlet side, that is, is top-disposed; and the other is disposed close to the light outlet side, that is, is bottom-disposed.

In a possible implementation, the at least one shutter blade is rotatably connected to the base by using a hinged structure separately; each hinged structure includes a first rotating hole and a rotating shaft rotatably disposed in the first rotating hole, and an axial direction of the rotating shaft is consistent with the axial direction of the light inlet hole; and the first rotating hole is provided on the at least one shutter blade, and the rotating shaft is disposed on the base.

A rotating connection between the shutter blade and the base is implemented by the rotating shaft and the rotating hole cooperating with the rotating shaft, so that the structure is simple and easy to implement.

In a possible implementation, the plurality of aperture blades include the first aperture blade, a second rotating hole is provided on the first aperture blade, the at least one shutter blade includes the first shutter blade, the first rotating hole is provided on the first shutter blade, the first rotating hole communicates with the second rotating hole, and the rotating shaft passes through the first rotating hole and the second rotating hole, so that both the first shutter blade and the first aperture blade are rotatably connected to the base.

That is, the first shutter blade and the first aperture blade share a same rotating shaft. In this way, the structure can be simplified, and an assembly process can also be simplified.

In a possible implementation, the first shutter blade has a first edge away from the rotating shaft, the first aperture blade has a second edge away from the rotating shaft, and the first edge is farther away from the rotating shaft than the second edge at the first position.

Therefore, the first shutter blade blocks the aperture hole at the first position.

In a possible implementation, the at least one shutter blade is slidably connected to the carrier by using a sliding structure separately; each sliding structure includes a first guide groove and a slide pin slidably disposed in the first guide groove; and the first guide groove is provided on the at least one shutter blade, and the slide pin is disposed on the carrier.

A rotating connection between the aperture blade and the base is implemented by the slide pin and the guide groove cooperating with the slide pin, so that the structure is simple and easy to implement.

In a possible implementation, the plurality of aperture blades include the first aperture blade, a second guide groove is provided on the first aperture blade, the at least one shutter blade includes the first shutter blade, the first guide groove is provided on the first shutter blade, and the slide pin passes through the first guide groove and the second guide groove, so that both the first shutter blade and the first aperture blade are slidably connected to the carrier.

That is, the first shutter blade and the first aperture blade may share a same slide pin.

In a possible implementation, an orthographic projection of the first guide groove on the first aperture blade at least partially overlaps the second guide groove.

According to another aspect, this application further provides a camera module. The camera module includes a lens and the variable aperture apparatus according to any one of the foregoing implementations, where the lens is disposed on a light outlet side of an aperture hole of the variable aperture apparatus.

The camera module provided in this embodiment of this application includes the foregoing variable aperture apparatus. The variable aperture apparatus not only includes a plurality of aperture blades that can enclose a light inlet hole, but also includes a shutter blade. The shutter blade and the aperture blade are integrated into one variable aperture apparatus, thereby implementing a continuous variable aperture function and all exposure functions.

According to still another aspect, this application further provides an electronic device. The electronic device includes a controller and the camera module according to any one of the foregoing implementations, where the controller is electrically connected to the camera module.

The electronic device provided in this embodiment of this application includes the foregoing camera module. Therefore, the electronic device provided in this embodiment of this application and the camera module in the foregoing technical solution can resolve a same technical problem, and achieve same expected effect.

According to yet another aspect, this application further provides a control method for a variable aperture apparatus. The variable aperture apparatus includes a plurality of aperture blades and a shutter blade; and
the control method includes:
receiving a first instruction;
controlling, according to the first instruction, the plurality of aperture blades and the shutter blade to move to a first position; and
controlling the plurality of aperture blades and the shutter blade to move from the first position to a second position, where
the shutter blade completely blocks a light inlet hole enclosed by the plurality of aperture blades at the first position, and the shutter blade deviates from the light inlet hole enclosed by the plurality of aperture blades at the second position.

In the control method for the variable aperture apparatus provided in this application, movement of the plurality of aperture blades and the shutter blade is controlled, and a global shutter is implemented through cooperation of the plurality of aperture blades and the shutter blade.

In a possible implementation, the control method further includes:
receiving a second instruction; and
controlling, according to the second instruction, the plurality of aperture blades and the shutter blade to move to a target position between the first position and the second position, where at the target position, the plurality of aperture blades enclose a target aperture hole, and the shutter blades deviate from the target aperture hole.

In the control method, an f-number can be controlled; and when the f-number is adjusted, the shutter blade deviates from the aperture hole. In this way, the shutter blade does not affect a continuous variable aperture function.

### BRIEF DESCRIPTION OF DRAWINGS

FIG. 1 is a three-dimensional diagram of an electronic device according to some embodiments of this application;
FIG. 2 is an exploded diagram of the electronic device shown in FIG. 1;
FIG. 3 is a three-dimensional diagram of a camera module according to some embodiments of this application;
FIG. 4 is an exploded diagram of the camera module shown in FIG. 3;
FIG. 5 is a three-dimensional diagram of a variable aperture apparatus according to an embodiment of this application;
FIG. 6 is an exploded diagram of a variable aperture apparatus according to an embodiment of this application;
FIG. 7 is an exploded diagram of a variable aperture apparatus according to an embodiment of this application;
FIG. 8 is an exploded diagram of a variable aperture apparatus according to an embodiment of this application;
FIG. 9 is a three-dimensional diagram of a base in a variable aperture apparatus according to an embodiment of this application;
FIG. 10 is a three-dimensional diagram of a drive apparatus, a carrier, and a base in a variable aperture apparatus according to an embodiment of this application;
FIG. 11 is a diagram of a structure of a drive apparatus in a variable aperture apparatus according to an embodiment of this application;
FIG. 12A is an exploded diagram of a variable aperture apparatus according to an embodiment of this application;
FIG. 12B is a diagram of a structure of a plurality of aperture blades according to an embodiment of this application;
FIG. 13A, FIG. 13B, FIG. 13C, FIG. 13D, and FIG. 13E are diagrams of structures of a plurality of aperture blades and a shutter blade moving to different positions according to an embodiment of this application;
FIG. 14A and FIG. 14B are diagrams of structures of a plurality of aperture blades and a shutter blade moving to different positions according to an embodiment of this application;
FIG. 15 is an exploded diagram of a variable aperture apparatus according to an embodiment of this application;
FIG. 16A, FIG. 16B, FIG. 16C, FIG. 16D, and FIG. 16E are diagrams of structures of a plurality of aperture blades and a shutter blade moving to different positions according to an embodiment of this application;
FIG. 17 is an exploded diagram of a variable aperture apparatus according to an embodiment of this application;
FIG. 18A, FIG. 18B, FIG. 18C, FIG. 18D, and FIG. 18E are diagrams of structures of a plurality of aperture blades and a shutter blade moving to different positions according to an embodiment of this application;
FIG. 19 is a top view of a shutter blade and an aperture blade in a variable aperture apparatus according to an embodiment of this application;
FIG. 20 is an exploded diagram of a variable aperture apparatus according to an embodiment of this application;
FIG. 21A, FIG. 21B, FIG. 21C, FIG. 21D, and FIG. 21E are diagrams of structures of a plurality of aperture blades and a shutter blade moving to different positions according to an embodiment of this application;
FIG. 22 is an exploded diagram of a variable aperture apparatus according to an embodiment of this application;
FIG. 23A, FIG. 23B, FIG. 23C, FIG. 23D, and FIG. 23E are diagrams of structures of a plurality of aperture blades and a shutter blade moving to different positions according to an embodiment of this application;
FIG. 24 is an exploded diagram of a variable aperture apparatus according to an embodiment of this application;
FIG. 25A, FIG. 25B, FIG. 25C, FIG. 25D, and FIG. 25E are diagrams of structures of a plurality of aperture blades and a shutter blade moving to different positions according to an embodiment of this application;
FIG. 26 is a top view of a variable aperture apparatus according to an embodiment of this application;
FIG. 27 is a three-dimensional diagram of a partial structure of a variable aperture apparatus according to an embodiment of this application;
FIG. 28 is an exploded diagram of a partial structure of a variable aperture apparatus according to an embodiment of this application;
FIG. 29A, FIG. 29B, and FIG. 29C are diagrams of structures of an aperture blade and a shutter blade according to an embodiment of this application;
FIG. 30 is an internal circuit diagram of an example electronic device according to this application;
FIG. 31 is a three-dimensional diagram of a partial structure of a variable aperture apparatus according to an embodiment of this application; and
FIG. 32 is a three-dimensional diagram of a carrier in a variable aperture apparatus according to an embodiment of this application.

### DESCRIPTION OF EMBODIMENTS

Embodiments of this application provide an electronic device. The electronic device is a type of electronic device having a shooting function. Specifically, the electronic device may be a portable electronic apparatus or another proper electronic apparatus. For example, the electronic device may be a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, a VR helmet, or the like.

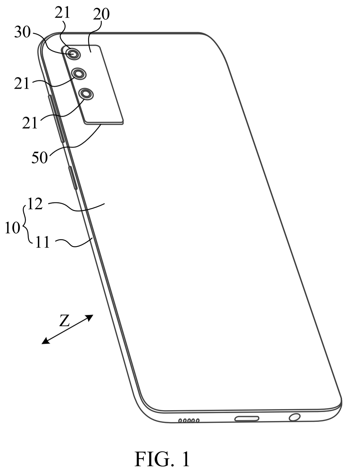

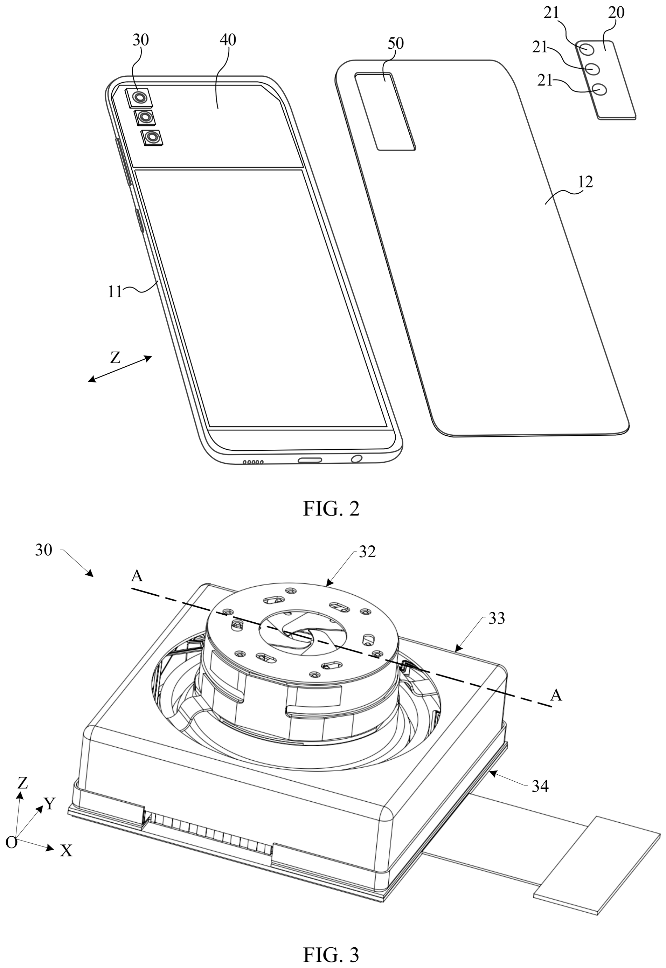

FIG. 1 is a three-dimensional diagram of an electronic device according to some embodiments of this application, and FIG. 2 is an exploded diagram of the electronic device shown in FIG. 1. In this embodiment, the electronic device being a mobile phone is used as an example. The electronic device includes a housing 10, a camera decorative cover 20, a camera module 30, and a main board 40.

The housing 10 is a housing structure formed by splicing a front cover plate (not shown in the figure), a frame 11, and a rear cover 12, and is configured to protect an internal electronic component and a circuit of the electronic device.

A mounting opening 50 is provided on the rear cover 12, the camera decorative cover 20 covers the mounting opening 50, and the camera decorative cover 20 is configured to protect the camera module of the electronic device. In some embodiments, the camera decorative cover 20 protrudes to the outside of the housing 10. In this way, the camera decorative cover 20 can increase mounting space of the camera module in the electronic device in a thickness direction (namely, a direction Z) of the electronic device.

At least one light transmission window 21 is disposed on the camera decorative cover 20, and the at least one light transmission window 21 is configured to allow scene light to be emitted into the rear-facing camera module.

The camera module 30 is disposed in the housing 10, and the camera module 30 is configured to shoot a photo or record a video.

The camera module 30 is integrated with a variable aperture apparatus (variable aperture, VA) and a drive motor. The variable aperture apparatus is configured to adjust an amount of entering light. The drive motor is configured to implement automatic focusing (automatic focusing, AF) and/or optical image stabilization (optical image stabilization, OIS).

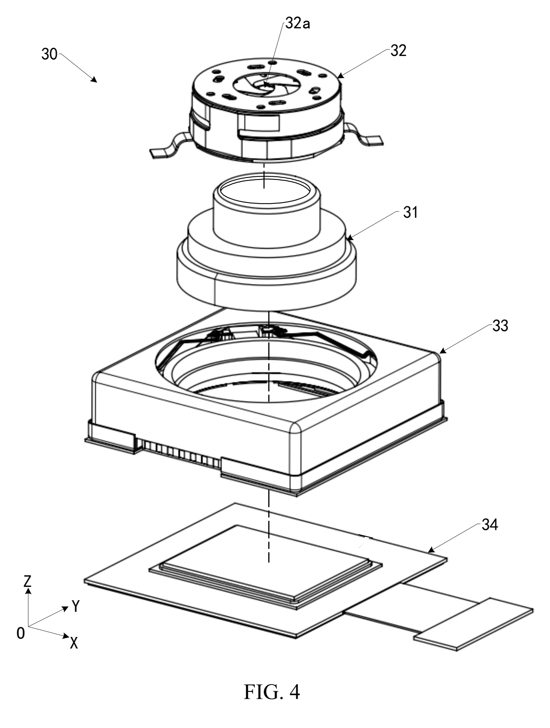

FIG. 3 is a three-dimensional diagram of the camera module 30 in the electronic device 100 shown in FIG. 1 and FIG. 2, and FIG. 4 is an exploded diagram of the camera module 30 shown in FIG. 3. In this embodiment, the camera module 30 includes an optical lens 31, the variable aperture apparatus 32, the drive motor 33, and a photosensitive structure 34.

The optical lens 31 is configured to perform imaging on a shoot scene, and the optical lens 31 may include a light inlet surface and a light outlet surface. The light inlet surface is a surface that faces the shoot scene when the optical lens 31 is used. Scene light is emitted into the optical lens 31 from the light inlet surface. The light outlet surface of the optical lens 31 is a surface that faces away from the shoot scene when the optical lens 31 is used. The scene light is emitted from the light outlet surface.

The variable aperture apparatus 32 has a variable-sized light inlet hole 32a. The light inlet hole 32a is located on a light entrance side of the optical lens 31. The scene light is emitted into the optical lens 31 through the light inlet hole 32a. In this way, the variable aperture apparatus 32 can adjust a size of the light inlet hole 32a, to achieve an objective of adjusting the amount of light entering the optical lens 31.

In some electronic devices, a rolling shutter of an electronic shutter is used for photographing or video shooting. In some application scenarios, the rolling shutter of the electronic shutter cannot meet a requirement for a shooting result. For example, when an object that moves at a high speed or vibrates quickly is shot, a jello effect such as "skew", "wobble", or "partial exposure" occurs in the rolling shutter of the electronic shutter.

To overcome the foregoing difficulties, embodiments of this application provide some implementable structures, and the structures may be integrated with a variable aperture structure. For a specific implementation structure, refer to the following descriptions.

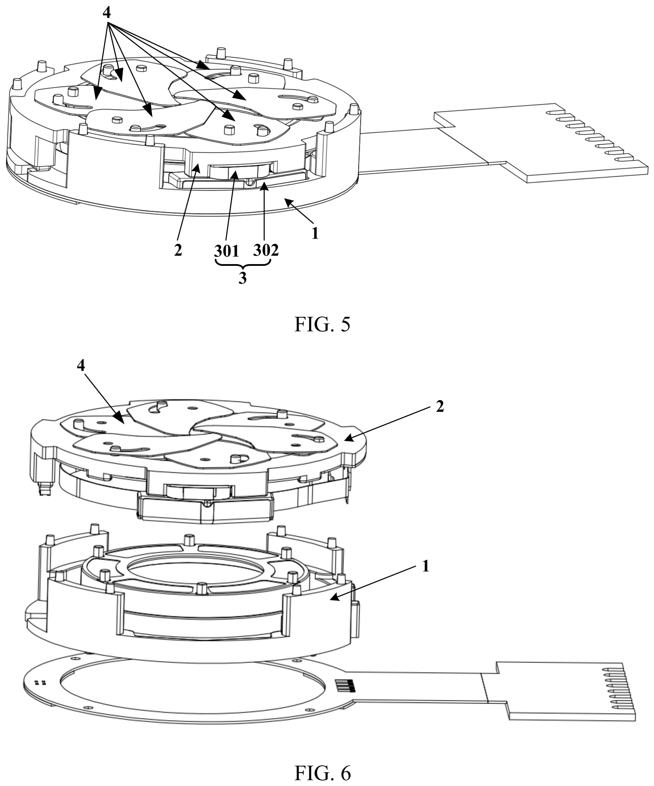

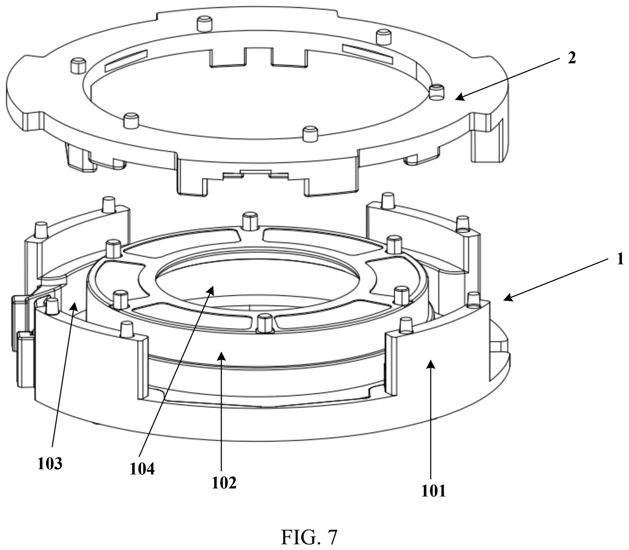

FIG. 5 is a three-dimensional diagram of a variable aperture apparatus according to an embodiment of this application. FIG. 6 is an exploded diagram of the variable aperture apparatus shown in FIG. 5. FIG. 6 shows a partial decomposition of the structure shown in FIG. 5, but not a complete decomposition. FIG. 7 is a diagram of a structure of a carrier and a base in the variable aperture apparatus.

With reference to FIG. 5 and FIG. 6, in this embodiment, the variable aperture apparatus includes the base 1 and the carrier 2. As shown in FIG. 7, the base 1 includes an outer ring structure 101 and an inner ring structure 102. The outer ring structure 101 and the inner ring structure 102 divide space in the base 1 into a first mounting cavity 103 and a second mounting cavity 104, and the first mounting cavity 103 is disposed around the second mounting cavity 104.

For example, as shown in FIG. 7, the carrier 2 may be rotatably disposed in the first mounting cavity 103, and the optical lens 31 in FIG. 5 may be disposed in the second mounting cavity 104.

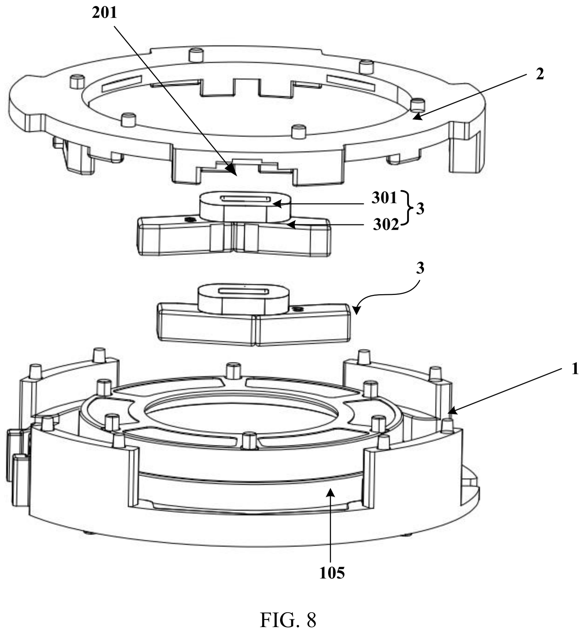

To enable the carrier 2 to rotate relative to the base 1, as shown in FIG. 8, the variable aperture apparatus further includes a drive apparatus 3, and the drive apparatus 3 is configured to drive the carrier 2 to rotate relative to the base 1. For example, a rotation axis of the carrier 2 is consistent with an optical axis of the optical lens 31.

The drive apparatus 3 has a plurality of implementable structures. For example, the drive apparatus 3 may include a coil and a magnet. For another example, the drive apparatus 3 may include a piezoelectric structure made of a piezoelectric material. For still another example, the drive apparatus 3 may include a shape memory alloy (shape memory alloy, SMA) drive structure.

Still refer to 8. The example drive apparatus 3 includes the coil 301 and the magnet 302. One of the coil 301 and the magnet 302 is disposed on the base 1, and the other is disposed on the carrier 2.

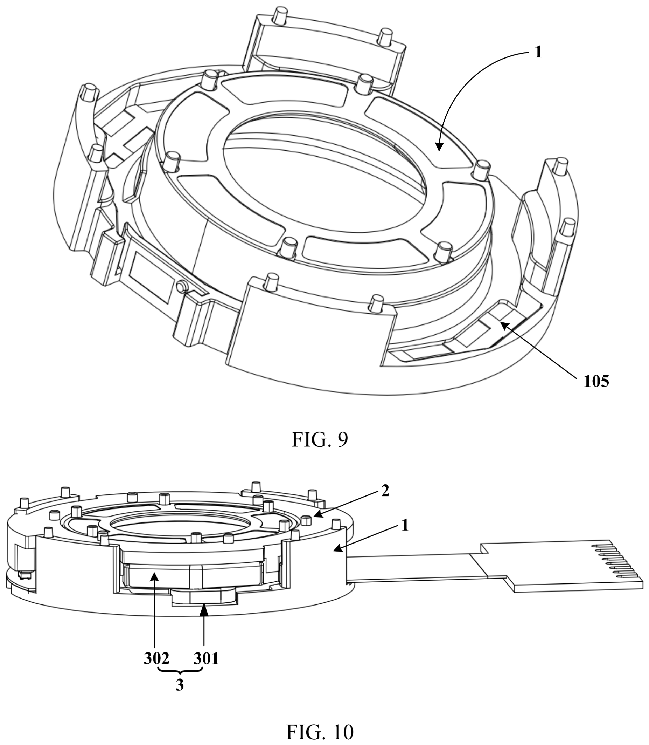

For example, in the example in FIG. 8, the magnet 302 is disposed on the base 1, and the coil 301 is disposed on the carrier 2. For another example, in the example in FIG. 10, the magnet 302 is disposed on the carrier 2, and the coil 301 is disposed on the base 1.

The coil 301 may be disposed in a plurality of manners. For example, in FIG. 8, a mounting groove 201 is provided on the carrier 2, and the coil 301 is disposed in the mounting groove 201.

Similarly, the magnet 302 may also be disposed in a plurality of manners. For example, as shown in FIG. 8 and FIG. 9, a mounting groove 105 is provided on the base 1, and the magnet 302 is disposed in the mounting groove 105. For example, the mounting groove 105 may be provided on the outer ring structure 101 of the base 1, and the magnet 302 is fastened in the mounting groove 105.

Electromagnetic induction is required between the coil 301 and the magnet 302. In this case, an orthographic projection of the magnet 302 on the coil 301 at least partially overlaps the coil 301.

A plurality of drive apparatuses 3 including the coil 301 and the magnet 302 may be disposed. As shown in FIG. 8, the plurality of drive apparatuses 3 may be disposed at an interval along a circumference of the carrier 2, to improve stability of rotation of the carrier 2 relative to the base 1.

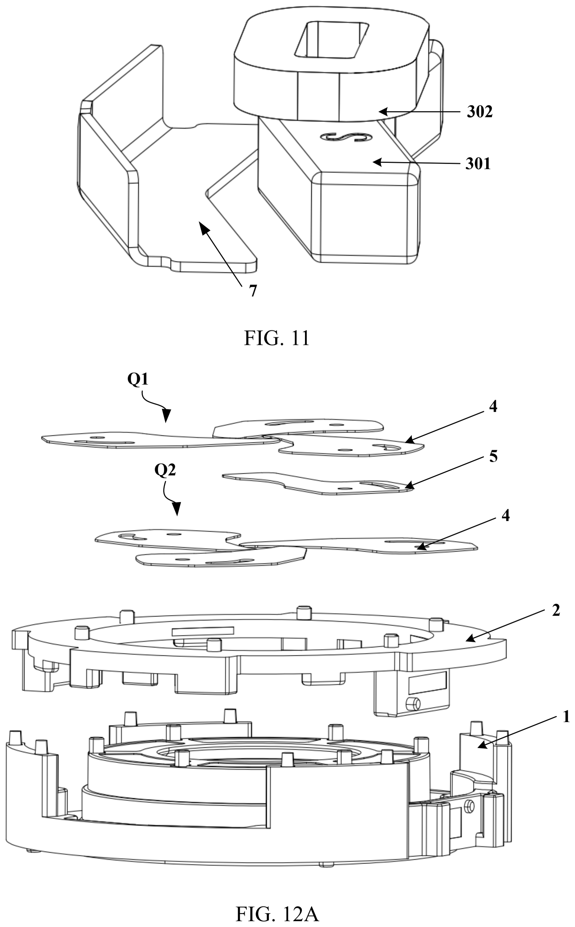

To ensure stability of the electromagnetic induction between the coil 301 and the magnet 302, FIG. 11 shows a protection structure for protecting the drive apparatus 3. The variable aperture apparatus further includes a magnetic blocking structure 7, and the magnet 301 is fastened in the magnetic blocking structure 7. Return to FIG. 9, the magnetic blocking structure 7 may alternatively be disposed in the mounting groove 105 of the base 1.

The magnetic blocking structure 7 may weaken interference caused by another structure to the electromagnetic induction between the coil 301 and the magnet 302. For example, when another electromagnetic device is further disposed around the variable aperture apparatus, the magnetic blocking structure 7 may be used to weaken electromagnetic interference between the electromagnetic device and the drive apparatus 3 in this embodiment of this application.

FIG. 12A is an exploded diagram of a partial structure of the example variable aperture apparatus according to an example of this application. The variable aperture apparatus further includes a plurality of aperture blades 4, the plurality of aperture blades 4 are disposed around the circumference of the carrier 2, each aperture blade 4 is slidably connected to the carrier 2, and each aperture blade 4 is rotatably connected to the base 1.

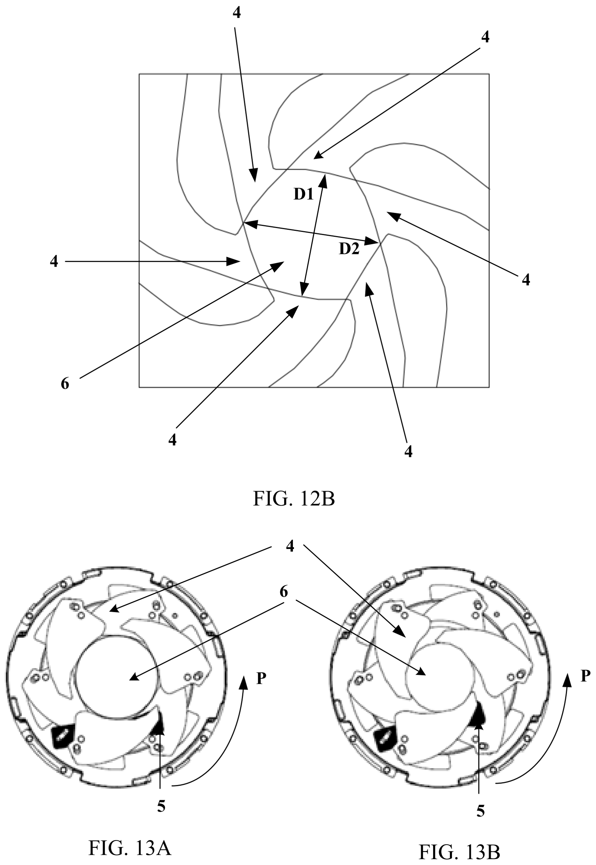

In this case, when the carrier 2 rotates relative to the base 1 under an action of an ampere force of the coil 301 and the magnet 302, each aperture blade 4 is driven to rotate relative to the base 1, and slide relative to the carrier 2, to adjust a size of a light inlet hole 6 enclosed by the plurality of aperture blades 4 shown in FIG. 12B. For example, a central axis of the light inlet hole 6 is consistent with the optical axis of the optical lens 31.

The size of the light inlet hole 6 in this embodiment of this application may be understood as an area of the light inlet hole 6 shown in FIG. 12B, or may be understood as an aperture diameter of the light inlet hole 6. For example, in FIG. 12B, the light inlet hole 6 is an approximately circular structure enclosed by a plurality of edges, and the aperture diameter of the light inlet hole 6 may be a distance D1 between two opposite edges, or may be a distance D2 between two diagonal edges.

In addition, still with reference to FIG. 12A, the variable aperture apparatus further includes at least one shutter blade 5, and each shutter blade 5 is slidably connected to the carrier 2 and is rotatably connected to the base 1. FIG. 12A shows an example of one shutter blade 5.

In this way, when the carrier 2 rotates relative to the base 1 under the action of the ampere force of the coil 301 and the magnet 302, the plurality of aperture blades 4 and the shutter blade 5 are driven to slide relative to the carrier 2, and rotate relative to the base 1.

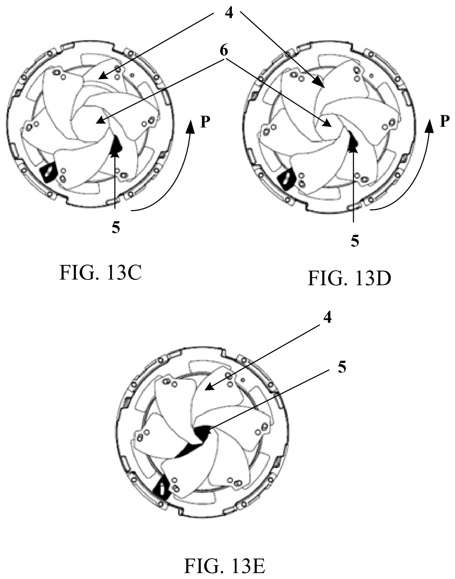

Figs. 13A, 13B, 13C, 13D, and 13E are diagrams of structures of the plurality of aperture blades 4 and the shutter blades 5 moving to different positions.

From FIG. 13A to FIG. 13E, the plurality of aperture blades 4 move in a P direction, so that the aperture diameter of the enclosed light inlet hole 6 gradually decrease. In addition, in FIG. 13A, FIG. 13B, FIG. 13C, and FIG. 13D, an end of the shutter blade 5 deviates from the light inlet hole 6 formed by the plurality of aperture blades 4, that is, it may be understood as that the end of the shutter blade 5 does not block the light inlet hole 6. However, in FIG. 13E, the end of the shutter blade 5 moves to a position of the light inlet hole 6, and completely blocks the light inlet hole 6.

On the contrary, when the plurality of aperture blades 4 and the shutter blade 5 move from FIG. 13E to FIG. 13A, in FIG. 13E, the end of the shutter blade 5 completely blocks the light inlet hole 6. As the plurality of aperture blades 4 and the shutter blade 5 continue to move, the shutter blade 5 that blocks the light inlet hole 6 deviates from the light inlet hole 6, so that the light inlet hole 6 is exposed, to collect light.

In a state in which the shutter blade 5 completely blocks the light inlet hole 6 shown in FIG. 13E, a global shutter can be implemented by switching to a state in which the shutter blade 5 does not block the light inlet hole 6.

Based on the foregoing shown structure, in this example of this application, complete exposure is implemented by the shutter blade 5 and the plurality of aperture blades 4. For example, when the structure is used for shooting in high-speed movement or rapid vibration, all pixels of a photosensitive device are exposed at the same time, so that a case such as "skew", "wobble", or "partial exposure" of a shooting structure can be weakened, to improve a shooting effect and improve user experience.

In addition, in the example variable aperture apparatus in this application, a function of adjusting the aperture may be further maintained, and a continuous variable aperture function is not affected. In comparison with some conventional technologies, in this application, a shutter blade used as a mechanical shutter is integrated into a variable aperture structure, and the mechanical shutter cooperates with the plurality of aperture blades to implement the global shutter. In this way, introduction of the mechanical shutter does not lead to an excessive increase in a size of an image shooting device and a significant increase in manufacturing costs.

In addition, it is described in the foregoing that the plurality of aperture blades 4 and the shutter blade 5 implement movement under an action of a same drive apparatus 3. For example, the plurality of aperture blades 4 and the shutter blade 5 are started and stopped synchronously. In comparison with using a separate drive apparatus to drive the shutter blade 5 to move, in this example of this application, the apparatus may be simplified, so that the entire device is light and miniaturized. For example, when the device is used in a mobile phone or a tablet computer, a design requirement of miniaturization, and lightness and thinness is met.

In this example of this application, that the shutter blade 5 blocks the light inlet hole 6 may be understood as that the shutter blade 5 completely blocks the light inlet hole 6, preventing light from entering the light inlet hole 6.

In this example of this application, that the shutter blade 5 deviates from the light inlet hole 6 may be understood as that, as shown in FIG. 13A to FIG. 13D, the shutter blade 5 deviates from the light inlet hole 6, leaving the light inlet hole 6 fully open; or that the shutter blade 5 deviates from the light inlet hole 6 may be understood as that a part of the light inlet hole 6 is blocked by the shutter blade 5, and a part of the light inlet hole 6 is not blocked by the shutter blade 5, so that light can further enter the light inlet hole 6 that is not blocked by the shutter blade 5.

With reference to FIG. 13A to FIG. 13E again, in a movement process of the plurality of aperture blades 4, movement positions may include a first position and a second position. In addition, the aperture diameter of the light inlet hole 6 enclosed by the plurality of aperture blades 4 becomes larger when the plurality of aperture blades 4 move from the first position to the second position. For example, at the first position shown in FIG. 13E, the aperture diameter of the light inlet hole 6 is smaller than that at any second position shown in FIG. 13A to FIG. 13D. In addition, at the first position shown in FIG. 13E, the shutter blade 5 blocks the light inlet hole 6. At any second position shown in FIG. 13D to FIG. 13A, the shutter blade 5 does not block the light inlet hole 6.

In some examples, the first position at which the shutter blade 5 blocks the light inlet hole 6 may be a position of a minimum light inlet hole shown in FIG. 13E.

In some other examples, the second position at which the shutter blade 5 deviates from the light inlet hole 6 and does not block the light inlet hole 6 may include a position of a maximum light inlet hole shown in FIG. 13A and any position other than the position of the minimum light inlet hole.

In some examples related to this application, as described above, the plurality of aperture blades 4 and the shutter blade 5 are driven by a same drive apparatus to move, and are started and stopped at the same time, and movement time is also the same.

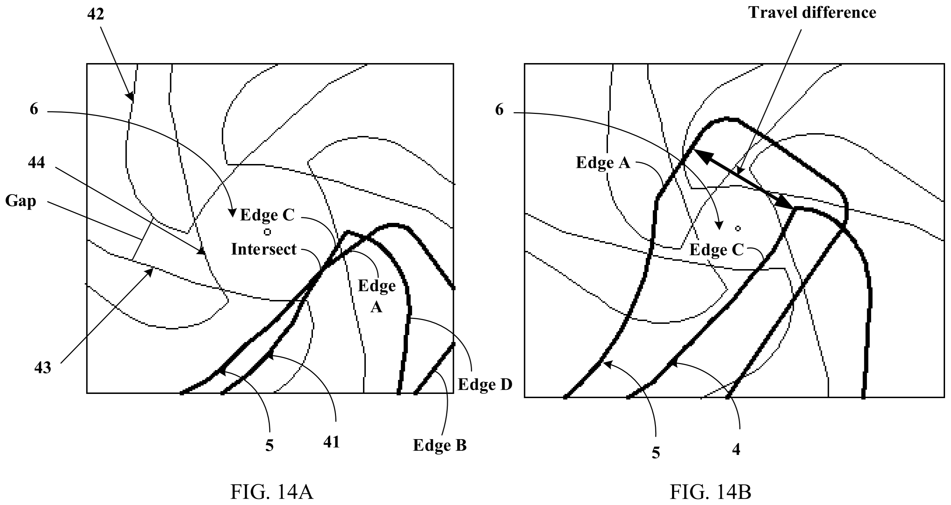

For example, the shutter blade 5 shown in FIG. 14A encounters one aperture blade 41 when the shutter blade 5 moves from the position shown FIG. 13A to the first position shown in FIG. 13E. To be specific, in FIG. 14A, the shutter blade 5 has a first side edge A and a second side edge B, and the first side edge A is closer to a center of the light inlet hole than the second side edge B; and the aperture blade 41 has a third side edge C and a fourth side edge D, and the third side edge C is closer to the center of the light inlet hole than the fourth side edge D. When the first side edge A intersects with the third side edge C, it may be understood as that the aperture blade and the shutter blade move to a third position, where the third position is located between the first position and the second position. As the aperture blade 41 and the shutter blade 5 continue to move from the third position to the first position, as shown in FIG. 14B, when the shutter blade 5 moves to completely block the light inlet hole 6, it is clear that a travel of the shutter blade 5 is greater than a travel of the aperture blade 41, resulting in a travel difference as shown in FIG. 14B. In this way, when the shutter blade 5 moves from the third position to the first position shown in FIG. 14A, a movement speed of the shutter blade 5 is greater than a movement speed of the aperture blade 41. Therefore, the shutter blade 5 can completely block the light inlet hole 6 only after moving for same time. It may be understood as that, from FIG. 14B to FIG. 14A, in the process in which the plurality of aperture blades 4 move from the first position to the second position, to implement the global shutter, when the plurality of aperture blades 4 are at the first position or near the first position, the movement speed of the shutter blade 5 is greater than the movement speed of the aperture blade 4. The movement speed herein may be a linear speed.

When the aperture blade 41 and the shutter blade 5 move from the third position to the second position, in some examples, the movement speed of the shutter blade 5 may be less than the movement speed of the aperture blade 41. In some other examples, the movement speed of the shutter blade 5 may be equal to the movement speed of the aperture blade 41. In still some other examples, the movement speed of the shutter blade 5 may be greater than the movement speed of the aperture blade 41.

In conclusion, when the aperture blade 41 and the shutter blade 5 move from the third position to the second position, the shutter blade 5 cannot block the light inlet hole, and the light inlet hole may be used as an aperture hole having a specific aperture.

The following describes, with reference to FIG. 14A and FIG. 14B, the light inlet hole 6 enclosed by the plurality of aperture blades 4 in this embodiment of this application. It may be understood that, in some cases, the light inlet hole 6 may be used as an aperture hole having an f-number (for example, a light inlet hole formed at a specific position may correspond to a specific f-number, so that the light inlet hole may be used as an aperture hole having a specific aperture). In some other cases, the light inlet hole 6 is not used as an aperture hole. Usually, a minimum aperture hole is greater than the minimum light inlet hole 6. That is, when the light inlet hole 6 is used as the aperture hole, there is the minimum aperture diameter (a maximum f-number). Then, the light inlet hole 6 may be further reduced until the minimum light inlet hole is reached.

For example, as shown in FIG. 14A, when the shutter blade and the plurality of aperture blades move, and the light inlet holes 6 enclosed by the plurality of aperture blades is gradually reduced until a side edge A of the aperture blade 41 intersects a side edge B of the shutter blade 5, the shutter blade 5 does not block the light inlet hole 6, that is, the light inlet hole 6 is fully open. In this way, the formed light inlet hole 6 may be used as the aperture hole of the variable aperture apparatus. The light inlet hole 6 shown in FIG. 14A may be the minimum aperture hole of the variable aperture apparatus.

In some examples, when the shutter blade and the plurality of aperture blades continue to move at the position shown in FIG. 14A, if the shutter blade rotates at a small angle, for example, a rotation angle is less than or equal to 5°, the enclosed light inlet hole 6 may also be considered as the aperture hole of the variable aperture apparatus.

For another example, from FIG. 14A to FIG. 14B, as the plurality of aperture blades and the shutter blades continue to move, the light inlet hole 6 enclosed by the plurality of aperture blades are further reduced, and the shutter blade 5 partially blocks the light inlet hole 6 until the light inlet hole 6 is completely blocked. In this case, the shutter blade 5 partially blocks the light inlet hole 6, or completely blocks the light inlet hole 6. In this state, the light inlet hole 6 cannot be used as the aperture hole of the variable aperture apparatus.

Return to FIG. 12A. In some examples, the plurality of aperture blades 4 may include a first group of aperture blades Q1 and a second group of aperture blades Q2, and any group of the first group of aperture blades Q1 and the second group of aperture blades Q2 includes a plurality of aperture blades 4. For example, in the example of FIG. 12A, each group including three surrounding aperture blades 4 is shown.

In addition, the first group of aperture blades Q1 and the second group of aperture blades Q2 are stacked in a direction parallel to the optical axis.

In the example shown in FIG. 12A, in a process in which the plurality of aperture blades 4 move to enclose the light inlet hole 6, as shown in FIG. 14A, there is a gap between every two adjacent aperture blades in the first group of aperture blades Q1. For example, there is a gap between an aperture blades 42 and an aperture blades 43, but an aperture blade 44 in the second group of aperture blades may block the gap. In this case, in the top views shown in FIG. 13A to FIG. 13E, in a process in which the plurality of aperture blades move to adjust the size of the light inlet hole, there is no gap between the plurality of aperture blades, and there is no light leakage phenomenon. In this way, shooting performance can be improved.

FIG. 12A is only one example of an arrangement manner of the plurality of aperture blades. In some other examples, one or more groups of aperture blades may be included.

There are a plurality of cases in which the shutter blade 5 is disposed. In this application, an example in which the first group of aperture blades Q1 and the second group of aperture blades Q2 are included is used to provide several cases in which the shutter blade 5 is disposed.

As shown in FIG. 12A, the shutter blade 5 is disposed between the first group of aperture blades Q1 and the second group of aperture blades Q2. It may be understood as that the shutter blade 5 is centrally disposed.

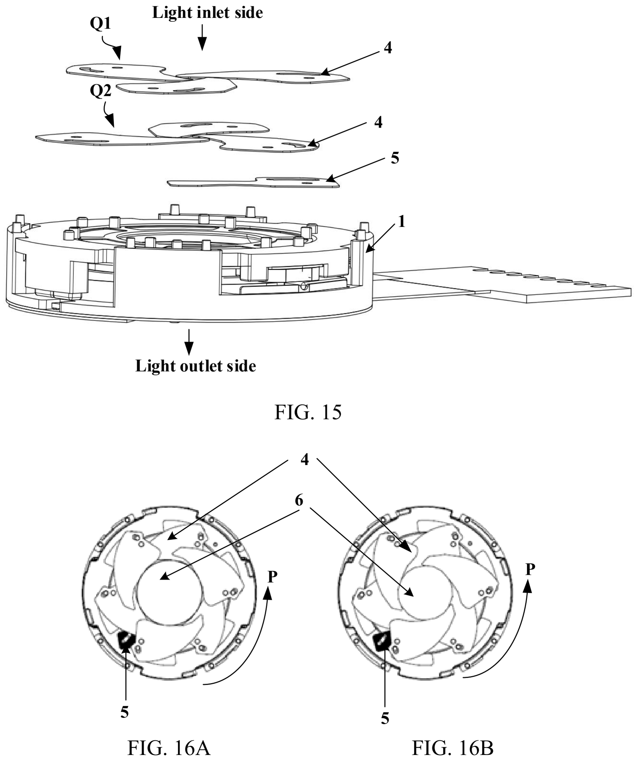

FIG. 15 is an exploded diagram of another partial structure of the example variable aperture apparatus according to this application. In this example, the first group of aperture blades Q1 is closer to a light inlet side than the second group of aperture blades Q2, and the shutter blade 5 is disposed on a side that is of the second group of aperture blades Q2 and that is close to the light outlet side. It may be considered that the shutter blade 5 is bottom-disposed.

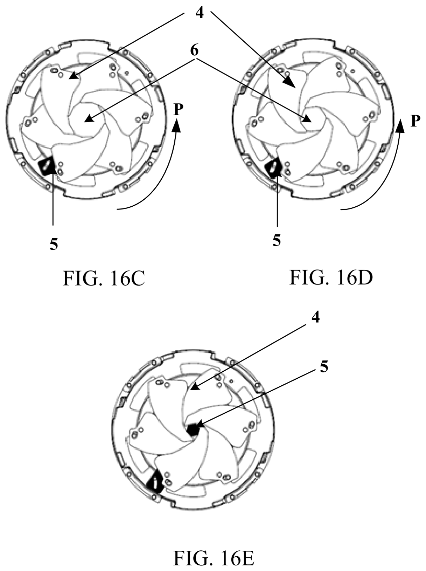

FIG. 16A, FIG. 16B, FIG. 16C, FIG. 16D, and FIG. 16E are diagrams of structures of the plurality of aperture blades 4 and the shutter blade 5 moving to different positions when the shutter blade 5 is bottom-disposed in FIG. 15.

From FIG. 16A to FIG. 16E, the plurality of aperture blades 4 move in the P direction, so that the aperture diameter of the enclosed light inlet hole 6 gradually decreases, and the f-number gradually increases. In addition, in FIG. 16A, FIG. 16B, FIG. 16C, and FIG. 16D, the end of the shutter blade 5 deviates from the light inlet hole 6 formed by the plurality of aperture blades 4; and in FIG. 16E, the end of the shutter blade 5 moves to the position of the light inlet hole 6, to block the light inlet hole 6.

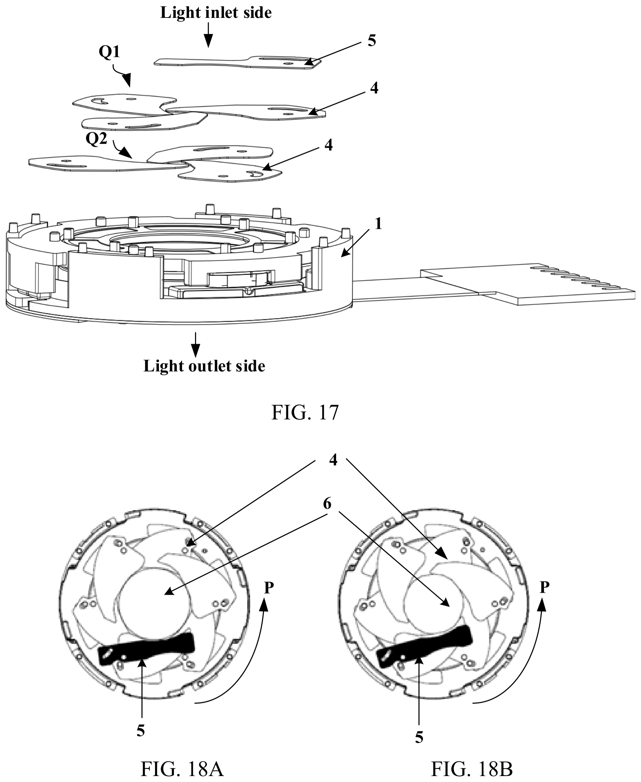

FIG. 17 is an exploded diagram of another partial structure of the example variable aperture apparatus according to this application. In this example, the first group of aperture blades Q1 is closer to the light inlet side than the second group of aperture blades Q2, and the shutter blade 5 is disposed on a side that is of the first group of aperture blades Q1 and that is close to the light inlet side. It may be considered that the shutter blade 5 is top-disposed in this example.

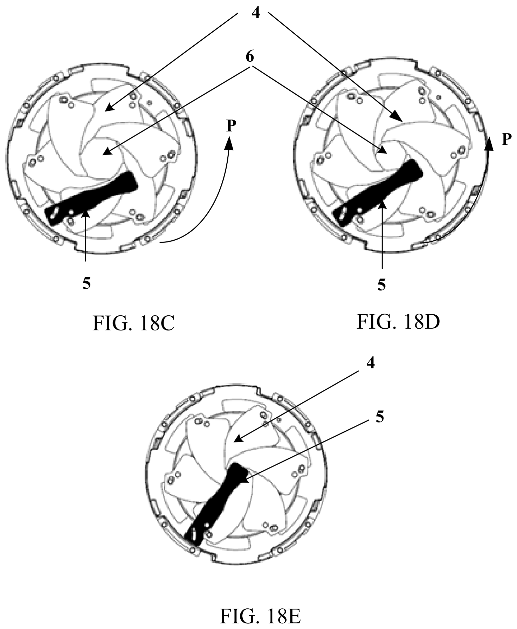

FIG. 18A, FIG. 18B, FIG. 18C, FIG. 18D, and FIG. 18E are diagrams of structures of the plurality of aperture blades 4 and the shutter blade 5 moving to different positions when the shutter blade 5 is top-disposed in FIG. 17.

From FIG. 18A to FIG. 18E, the plurality of aperture blades 4 move in the direction P, so that the aperture diameter of the enclosed light inlet hole 6 gradually decreases, and the f-number gradually increases. In addition, in FIG. 18A, FIG. 18B, FIG. 18C, and FIG. 18D, the end of the shutter blade 5 deviates from the light inlet hole 6 formed by the plurality of aperture blades 4; and in FIG. 18E, the end of the shutter blade 5 moves to the position of the light inlet hole 6, to block the light inlet hole 6.

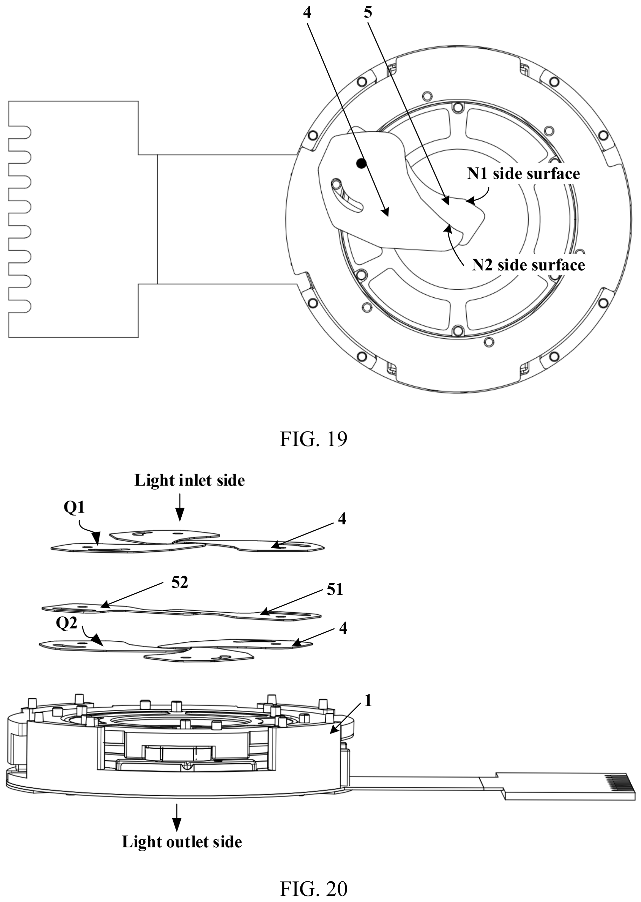

The shutter blade 5 is included in all the examples in FIG. 12A, FIG. 15, and FIG. 17. The light inlet hole is blocked by the end of the shutter blade 5. For example, in FIG. 19, the aperture blade 41 has an N1 side surface, and the shutter blade 5 has an N2 side surface. When the shutter blade 5 and the aperture blade 41 move to reduce the aperture diameter of the light inlet hole, both the N1 side surface and the N2 side surface move to a center direction of the light inlet hole; and when the shutter blade 5 and the aperture blade 41 move to the first position (the position at which the shutter blade 5 blocks the light inlet hole), the N1 side surface and the N2 side surface may be located on two sides of the center of the light inlet hole. In this way, the shutter blade 5 can block the light inlet hole.

In some other examples, more shutter blades may be further included. The following provides some feasible implementations.

In three examples shown in FIG. 20, FIG. 22, and FIG. 24, a first shutter blade 51 and a second shutter blade 52 are included. The first shutter blade 51 and the second shutter blade 52 may be disposed along the circumference of the carrier 2, and the first shutter blade 51 and the second shutter blade 52 are slidably connected to the carrier 2 separately, and are rotatably connected to the base 1 separately.

When the plurality of aperture blades 4 move from the first position to the second position, and the aperture diameter of the light inlet hole enclosed by the plurality of aperture blades 4 becomes larger, the first shutter blade 51 and the second shutter blade 52 block the light inlet hole at the first position, and both the first shutter blade 51 and the second shutter blade 52 deviate from the light inlet hole at the second position.

In the examples shown in FIG. 20 to FIG. 24, the light inlet hole is blocked or open through movement of the two shutter blades. In some other examples, more shutter blades may be included, for example, three or four. These shutter blades are arranged at intervals along the circumference of the carrier 2, and complete exposure is implemented through cooperation of these shutter blades to block the light inlet hole, or not to block the light inlet hole.

In the example shown in FIG. 20, the first shutter blades 51 and the second shutter blades 52 are both arranged between the first group of aperture blades Q1 and the second group of aperture blades Q2. It may be understood as that the first shutter blade 51 and the second shutter blade 52 are centrally disposed.

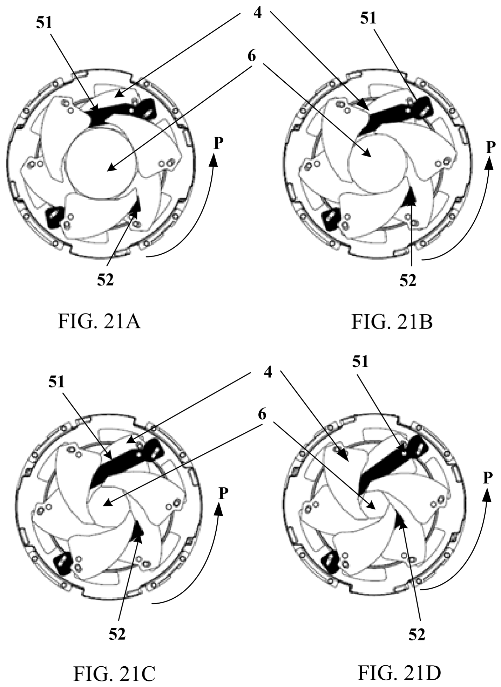

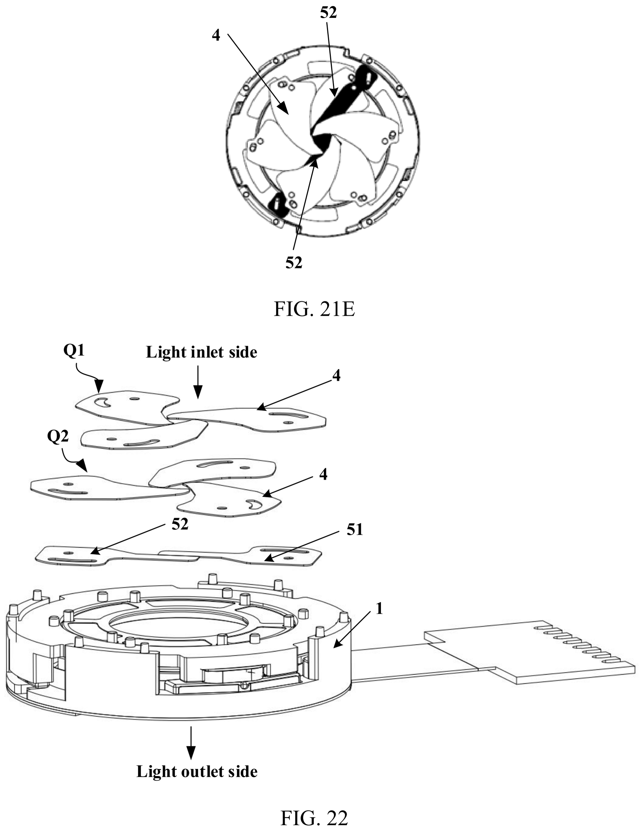

FIG. 21A, FIG. 21B, FIG. 21C, FIG. 21D, and FIG. 21E are diagrams of structures of the plurality of aperture blades 4, the first shutter blades 51, and the second shutter blades 52 moving to different positions when the first shutter blade 51 and the second shutter blade 52 are centrally disposed in FIG. 20.

From FIG. 21A to FIG. 21E, the plurality of aperture blades 4 move in the P direction, so that the aperture diameter of the enclosed light inlet hole 6 gradually decreases, and the f-number gradually increases. In addition, in FIG. 21A, FIG. 21B, FIG. 21C, and FIG. 21D, both ends of the first shutter blade 51 and the second shutter blade 52 deviate from the light inlet hole 6, and do not block the light inlet hole 6. However, in FIG. 21E, both the ends of the first shutter blade 51 and the second shutter blade 52 move to the position of the light inlet hole 6, and jointly block the light inlet hole 6.

FIG. 22 is an exploded diagram of another partial structure of the example variable aperture apparatus according to this application. In this example, the first group of aperture blades Q1 is closer to the light inlet side than the second group of aperture blades Q2, and the first shutter blade 51 and the second shutter blade 52 are disposed on a side that is of the second group of aperture blades Q2 and that is close to the light outlet side. It may be considered that the first shutter blade 51 and the second shutter blade 52 are bottom-disposed.

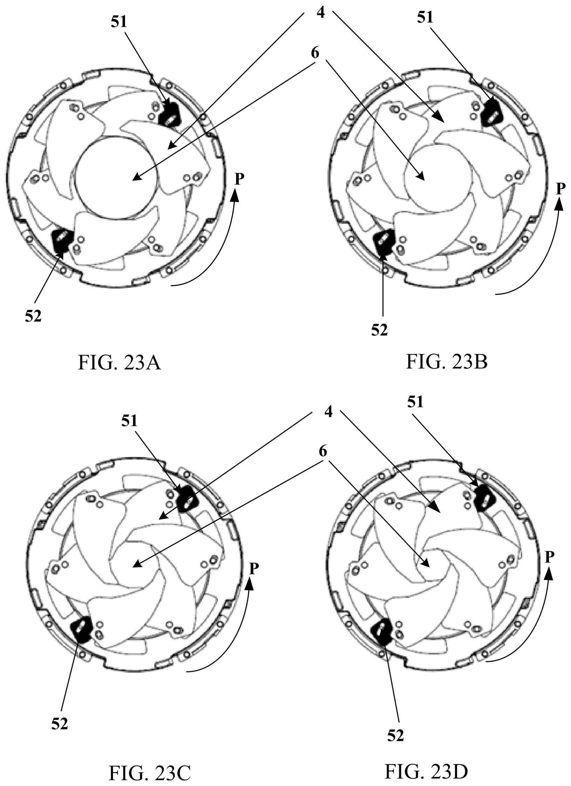

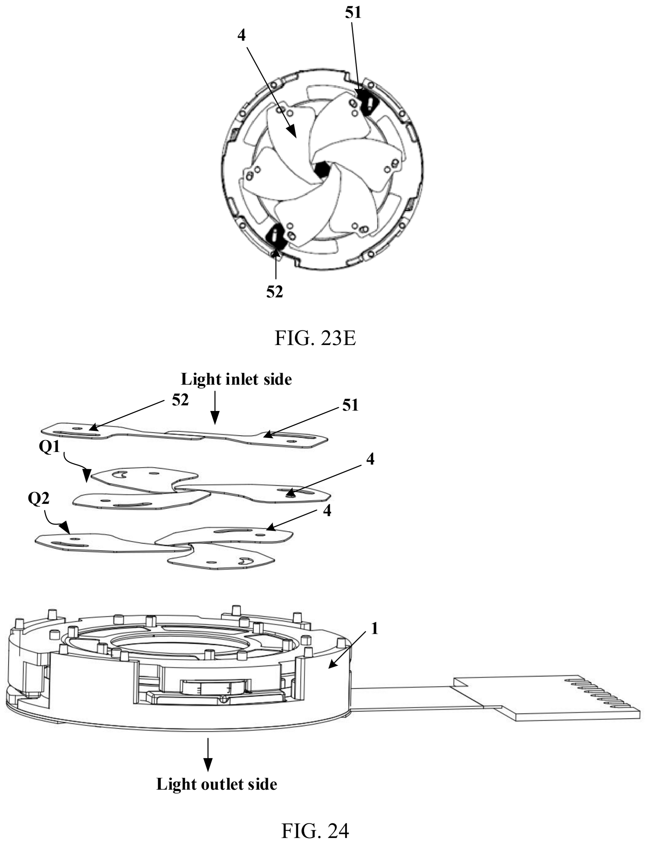

FIG. 23A, FIG. 23B, FIG. 23C, FIG. 23D, and FIG. 23E are diagrams of structures of the plurality of aperture blades 4 and the shutter blade 5 moving to different positions when the first shutter blade 51 and the second shutter blade 52 are bottom-disposed in FIG. 22.

From FIG. 23A to FIG. 23E, the plurality of aperture blades 4 move in the direction P, so that the aperture diameter of the enclosed light inlet hole 6 gradually decreases, and the f-number gradually increases. In addition, in FIG. 23A, FIG. 23B, FIG. 23C, and FIG. 23D, the ends of the first shutter blade 51 and the second shutter blade 52 that are bottom-disposed deviate from the light inlet hole 6 formed by the plurality of aperture blades 4; and in FIG. 23E, the ends of the first shutter blade 51 and the second shutter blade 52 that are bottom-disposed move to the position of the light inlet hole 6, and jointly block the light inlet hole 6.

FIG. 24 is an exploded diagram of another partial structure of the example variable aperture apparatus according to this application. In this example, the first group of aperture blades Q1 is closer to the light inlet side than the second group of aperture blades Q2, and the first shutter blade 51 and the second shutter blade 52 are disposed on a side that is of the first group of aperture blades Q1 and that is close to the light inlet side. It may be considered that the first shutter blade 51 and the second shutter blade 52 are top-disposed in this example.

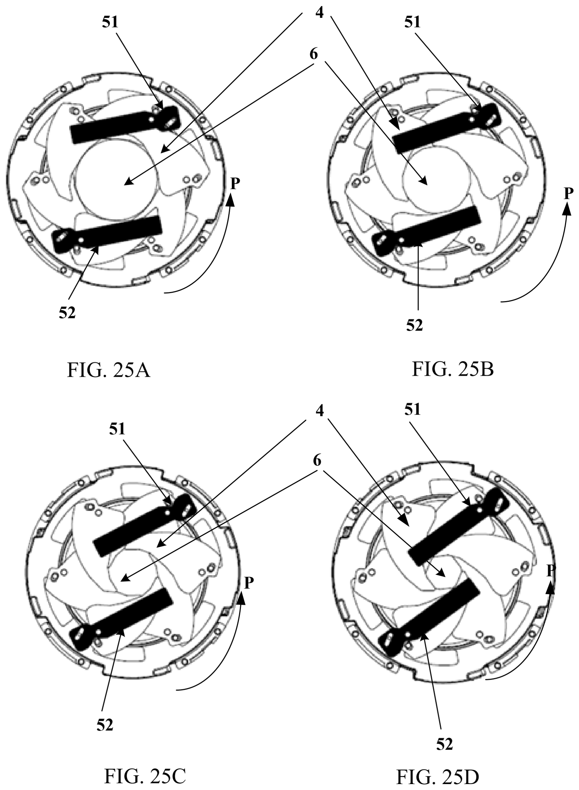

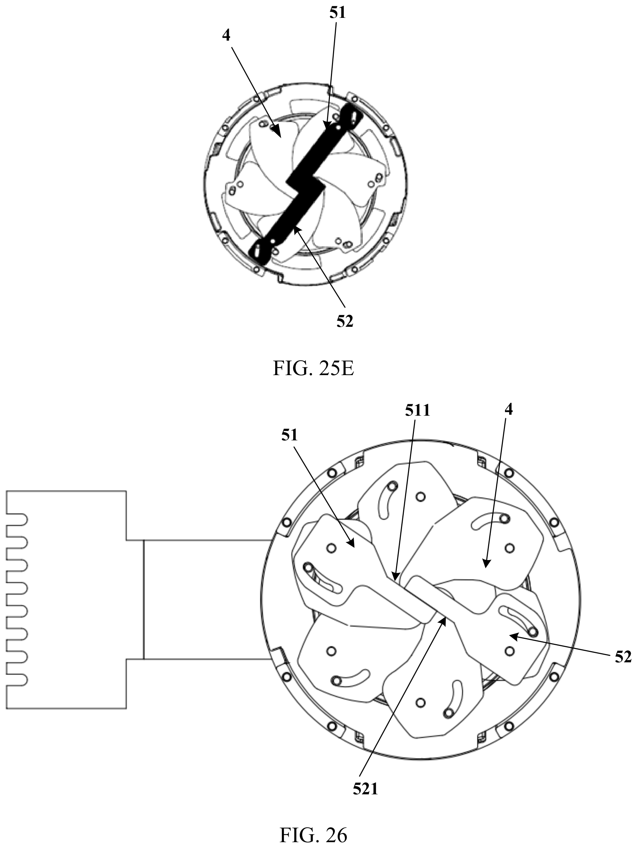

FIG. 25A, FIG. 25B, FIG. 25C, FIG. 25D, and FIG. 25E are diagrams of structures of the first shutter blade 51, the second shutter blade 52, and the plurality of aperture blades 4 moving to different positions when the first shutter blade 51 and the second shutter blade 52 are top-disposed in FIG. 24.

From FIG. 25A to FIG. 25E, the plurality of aperture blades 4 move in the direction P, so that the aperture diameter of the enclosed light inlet hole 6 gradually decreases, and the f-number gradually increases. In addition, in FIG. 25A, FIG. 25B, FIG. 25C, and FIG. 25D, the ends of the first shutter blade 51 and the second shutter blade 52 deviate from the light inlet hole 6 formed by the plurality of aperture blades 4; and in FIG. 25E, the ends of the first shutter blade 51 and the second shutter blade 52 move to the position of the light inlet hole 6, and block the light inlet hole 6.

Refer to FIG. 26. When the variable aperture apparatus includes the first shutter blade 51 and the second shutter blade 52 in FIG. 26, in a process in which the plurality of aperture blades 4 move to cause the enclosed light inlet hole to gradually decrease, a first contact surface 511 of the first shutter blade 51 and a second contact surface 521 of the second shutter blade 52 are close to each other. In some examples, the first contact surface 511 and the second contact surface 521 may be planes that are axially parallel to the light inlet hole, and the first contact surface 511 is in contact with the second contact surface 521 at the first position, so that the first shutter blade 51 and the second shutter blade 52 completely block the light inlet hole.

On the contrary, in a process in which the plurality of aperture blades 4 move to cause the enclosed light inlet hole to gradually increase, the first contact surface 511 of the first shutter blade 51 that blocks the light inlet hole and the second contact surface 521 of the second shutter blade 52 are away from each other until the light inlet hole are open, to implement the global shutter.

In some other examples, the first shutter blade 51 and the second shutter blade 52 may be sequentially disposed in the direction consistent with the axial direction of the light inlet hole. In a process in which the plurality of aperture blades 4 move to cause the enclosed light inlet hole to gradually decrease, the first shutter blade 51 and the second shutter blade 52 are close to each other. When the plurality of aperture blades move to the first position, an orthographic projection of the first shutter blade 51 on the second shutter blade 52 at least partially overlaps the second shutter blade 52, and an overlapped part may completely block the light inlet hole.

In this embodiment of this application, the shutter blade 5 is rotatably connected to the base 1, and the shutter blade 5 is slidably connected to the carrier 2; and the aperture blade 4 is rotatably connected to the base 1, and the aperture blade 4 is slidably connected to the carrier 2.

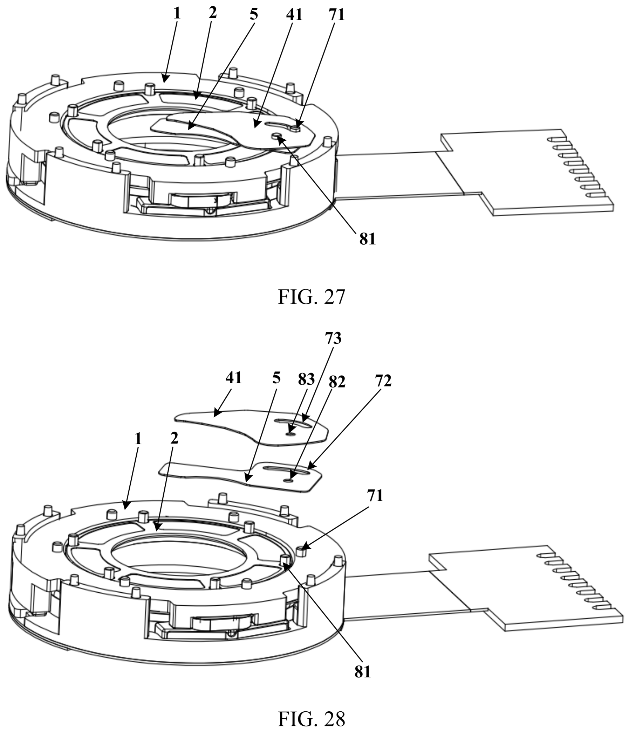

In either of the shutter blade 5 and the aperture blade 4, there are a plurality of rotating connection manners with the base 1. FIG. 27 and FIG. 28 show examples of a rotation manner. FIG. 28 is an exploded diagram of FIG. 27. A rotating shaft 81 is disposed on the base 1. For example, the rotating shaft 81 may be disposed on the inner ring structure 102 of the base 1. A rotating hole 82 (which may be referred to as a first rotating hole) is provided on the shutter blade 5, a rotating hole 83 (which may be referred to as a second rotating hole) is provided on the aperture blade 41, the rotating shaft 81 passes through the rotating hole 82 and the rotating hole 83, and the rotating shaft 81 may rotate in the rotating hole 82 and the rotating hole 83, so that the shutter blade 5 and the aperture blade 41 are rotatably connected to the base 1.

In the examples shown in FIG. 27 and FIG. 28, the shutter blade 5 and the aperture blade 41 share a same rotating shaft 81. In this way, a structure can be simplified from a perspective of a structure, and assembly difficulty can be reduced from a perspective of an assembly process.

In either of the shutter blade 5 and the aperture blade 4, there are a plurality of sliding connection manners with the carrier 2. FIG. 27 and FIG. 28 show examples of a sliding manner. A slide pin 71 is disposed on the carrier 2. A guide groove 72 (which may be referred to as a first guide groove) is provided on the shutter blade 5, and a guide groove 73 (which may be referred to as a second guide groove) is provided on the aperture blade 41, the slide pin 71 passes through the guide groove 72 and the guide groove 73, and the slide pin 71 may slide in the guide groove 72 and the guide groove 73 in an extension direction of the corresponding guide groove, so that the shutter blade 5 and the aperture blade 41 are slidably connected to the carrier 2.

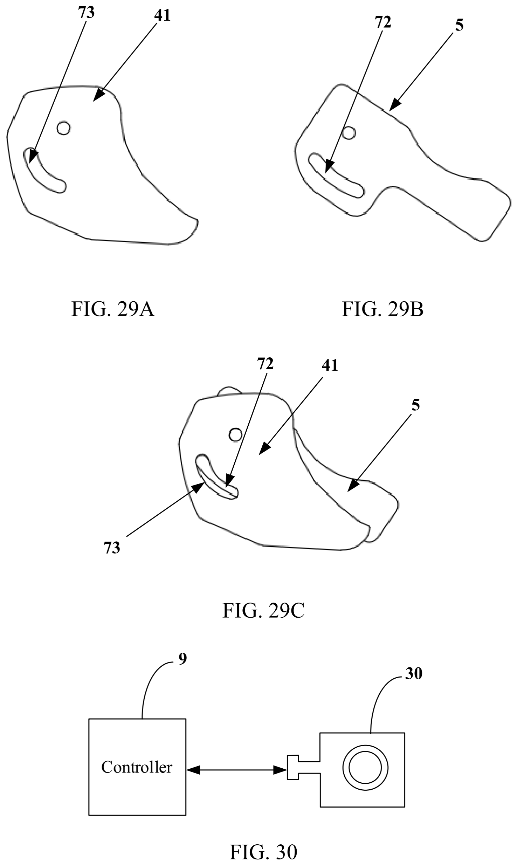

FIG. 29A is a diagram of a structure of the aperture blade 41, FIG. 29B is a diagram of a structure of the shutter blade 5, and FIG. 29C is a diagram of a structure of the shutter blade 5 and the aperture blade 41 when the shutter blade 5 blocks the light inlet hole.

In this example of this application, when the aperture blade 41 and the shutter blade 5 move to the minimum light inlet hole, a movement speed of the shutter blade 5 is greater than a movement speed of the aperture blade 41. Therefore, during design, a track of the guide groove 73 shown in FIG. 29A and a track of the guide groove 72 shown in FIG. 29B may be adjusted, to ensure that when the plurality of aperture blades move to the minimum light inlet hole, the shutter blade 5 may block the minimum light inlet hole.

Alternatively, in some other examples, a shape of the aperture blade 41 shown in FIG. 29A or a shape of the shutter blade 5 shown in FIG. 29B may be adjusted, to ensure that the shutter blade 5 may block the minimum light inlet hole when the plurality of aperture blades move to the minimum light inlet hole.

Still refer to FIG. 29C. When the plurality of aperture blades move to the minimum light inlet hole, and the shutter blade 5 may block the minimum light inlet hole, an orthographic projection of the guide groove 73 on the guide groove 72 at least partially overlaps of the guide groove 72.

FIG. 30 is an internal circuit diagram of the example electronic device 100 according to this application. The electronic device 100 further includes a controller 9. For example, the controller 9 may be disposed on a main board.

The controller 9 is electrically connected to the camera module 30. The controller 9 is configured to receive and process an electrical signal that is from the camera module 30 and that includes image information. The controller 9 is further configured to control the variable aperture apparatus of the camera module 30 and the drive motor to move, to implement adjustment of the amount of entering light, AF movement, and/or OIS movement for the camera module 30.

An embodiment of this application further provides a control method for a variable aperture apparatus. The control method for the variable aperture apparatus by a controller 9 includes:
receiving a first instruction, where the first instruction herein may be a global shutter instruction;
controlling, according to the first instruction, a plurality of aperture blades and a shutter blade in the variable aperture apparatus to move to a first position; and
controlling the plurality of aperture blades and the shutter blade to move to a second position, where
the shutter blade blocks a light inlet hole enclosed by the plurality of aperture blades at the first position, and the shutter blade deviates from the light inlet hole enclosed by the plurality of aperture blades at the second position.

In this way, the plurality of aperture blades and the shutter blades move from the first position to the second position, so a global shutter can be implemented.

In some examples, when a drive apparatus that is in the variable aperture apparatus and that is configured to drive the plurality of aperture blades and the shutter blade to move includes a coil and a magnet, or includes a piezoelectric structure, or includes an SMA drive structure, a first current may be applied to the drive apparatus, so that the plurality of aperture blades and the shutter blade move to the first position; and then a second current is applied to the drive apparatus, so that the plurality of aperture blades and the shutter blade move to the second position.

In addition, the control method may further include:
receiving a second instruction, where the second instruction may be a target f-number instruction; and
controlling, according to the second instruction, the plurality of aperture blades and the shutter blade to move to a target position, where the target position is located between the first position and the second position; and at the target position, the plurality of aperture blades enclose a target aperture hole, and the shutter blade deviate from the target aperture hole, so that a target f-number is obtained.

When the plurality of aperture blades and the shutter blades move to the target position, the formed light inlet hole may correspond to a specific f-number, and therefore may be used as an aperture hole having a specific aperture.

In some examples, the target position includes the position (referred to as the third position above) shown in FIG. 14A, that is, a position at which the side edge A of the aperture blade 41 intersects with the side edge B of the shutter blade 5, or may form the aperture hole of the specific aperture. In some other examples, the target position may include any position between the maximum light inlet hole and the third position in FIG. 14A.

In some implementation structures, when the drive apparatus that is in the variable aperture apparatus and that is configured to drive the plurality of aperture blades and the shutter blade to move includes a coil and a magnet, or includes a piezoelectric structure, or includes an SMA drive structure, a third current may be applied to the drive apparatus, so that the plurality of aperture blades and the shutter blade move to the third position.

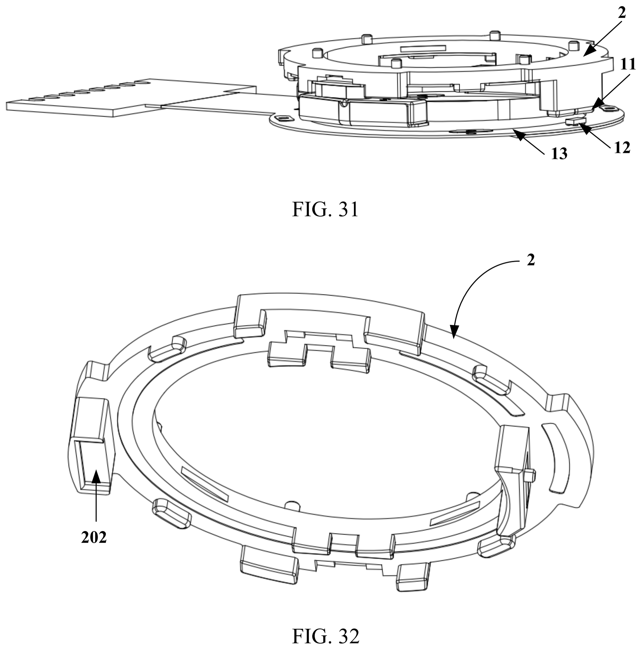

In some examples, FIG. 31 is an exploded diagram of the variable aperture apparatus according to an embodiment of this application. The variable aperture apparatus includes a sensing magnet 11 and a Hall sensor 12. A movement position of the carrier 2 may be detected through the sensing magnet 11 and the Hall sensor 12. A calculation control unit calculates a movement amount of the aperture blade 4 and the shutter blade 5 based on the movement position of the carrier 2, to control a current value applied to the drive apparatus.

Still refer to FIG. 31. The variable aperture apparatus further includes a circuit board 13, and the Hall sensor 12 may be disposed on the circuit board 13. Refer to FIG. 32. A mounting groove 202 may be provided on the carrier 2, and the sensing magnet 11 is disposed in the mounting groove 202.

In the descriptions of this specification, the described specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A variable aperture apparatus, comprising:
a base;
a carrier, wherein the carrier is rotatably connected to the base; and
a plurality of aperture blades and at least one shutter blade, wherein the plurality of aperture blades are disposed around a circumference of the carrier, and are configured to enclose a light inlet hole, the plurality of aperture blades and the at least one shutter blade are rotatably connected to the base, and the plurality of aperture blades and the at least one shutter blade are slidably connected to the carrier;
when the carrier rotates relative to the base, the plurality of aperture blades rotate relative to the base, and slide relative to the carrier, to adjust a size of the light inlet hole; and
movement positions of the plurality of aperture blades comprise a first position and a second position, the light inlet hole enclosed by the plurality of aperture blades becomes larger when the plurality of aperture blades move from the first position to the second position, the at least one shutter blade completely blocks the light inlet hole at the first position, and the at least one shutter blade deviates from the light inlet hole at the second position.

2. The variable aperture apparatus according to claim 1, wherein the first position is a position at which the plurality of aperture blades enclose a minimum light inlet hole.

3. The variable aperture apparatus according to claim 1 or 2, wherein the second position comprises a position at which the plurality of aperture blades enclose a maximum light inlet hole.

4. The variable aperture apparatus according to any one of claims 1 to 3, wherein
the at least one shutter blade comprises a first shutter blade, and the first shutter blade has a first side edge and a second side edge;
the plurality of aperture blades comprise a first aperture blade, and the first aperture blade has a third side edge and a fourth side edge;
when the plurality of aperture blades move to the second position, the first side edge is closer to a center of the light inlet hole than the second side edge, and the third side edge is closer to the center of the light inlet hole than the fourth side edge; and
the movement positions of the plurality of aperture blades further comprise a third position between the first position and the second position; when the plurality of aperture blades move from the first position to the third position, the first side edge intersects with the third side edge; and when the plurality of aperture blades move from the first position to the third position, a movement speed of the first shutter blade is greater than a movement speed of the first aperture blade.

5. The variable aperture apparatus according to any one of claims 1 to 4, wherein the variable aperture apparatus further comprises:
a drive apparatus, wherein the drive apparatus is connected to the base and the carrier, and the drive apparatus is configured to drive the carrier to rotate relative to the base, to drive the plurality of aperture blades and the at least one shutter blade to move.

6. The variable aperture apparatus according to claim 5, wherein the drive apparatus comprises:
a coil and a magnet, wherein one of the coil and the magnet is disposed on the carrier, and the other is disposed on the base.

7. The variable aperture apparatus according to any one of claims 1 to 6, wherein the at least one shutter blade comprises the first shutter blade and a second shutter blade;
the first shutter blade comprises a first contact surface, and the second shutter blade comprises a second contact surface; and
when the plurality of aperture blades move from the second position to the first position, the first contact surface and the second contact surface are close to each other, and the first contact surface and the first contact surface are in contact at the first position, so that the first shutter blade and the second shutter blade block the light inlet hole.

8. The variable aperture apparatus according to any one of claims 1 to 6, wherein the at least one shutter blade comprises the first shutter blade and a second shutter blade;
the first shutter blade and the second shutter blade are sequentially disposed in a direction consistent with an axial direction of the light inlet hole; and
when the plurality of aperture blades move to the first position, an orthographic projection of the first shutter blade on the second shutter blade at least partially overlaps the second shutter blade.

9. The variable aperture apparatus according to any one of claims 1 to 8, wherein the plurality of aperture blades comprise a first group of aperture blades and a second group of aperture blades; and
the first group of aperture blades and the second group of aperture blades are disposed in a stacked manner in the direction consistent with the axial direction of the light inlet hole; and in a movement process of the plurality of aperture blades, there is a gap between every two adjacent aperture blades in the first group of aperture blades, and the second group of aperture blades comprises an aperture blade opposite to the gap and blocks the gap.

10. The variable aperture apparatus according to claim 9, wherein the light inlet hole enclosed by the plurality of aperture blades has a light inlet side and a light outlet side, and the first group of aperture blades is closer to the light inlet side than the second group of aperture blades; and
the at least one shutter blade is disposed between the first group of aperture blades and the second group of aperture blades; or
the at least one shutter blade is disposed on a side that is of the first group of aperture blades and that is close to the light inlet side; or
the at least one shutter blade is disposed on a side that is of the second group of aperture blades and that is close to the light outlet side.

11. The variable aperture apparatus according to any one of claims 1 to 10, wherein the at least one shutter blade is rotatably connected to the base by using a hinged structure separately;
each hinged structure comprises a first rotating hole and a rotating shaft rotatably disposed in the first rotating hole, and an axial direction of the rotating shaft is consistent with the axial direction of the light inlet hole; and
the first rotating hole is provided on the at least one shutter blade, and the rotating shaft is disposed on the base.

12. The variable aperture apparatus according to claim 11, wherein the plurality of aperture blades comprise the first aperture blade, a second rotating hole is provided on the first aperture blade, the at least one shutter blade comprises the first shutter blade, the first rotating hole is provided on the first shutter blade, the first rotating hole communicates with the second rotating hole, and the rotating shaft passes through the first rotating hole and the second rotating hole, so that both the first shutter blade and the first aperture blade are rotatably connected to the base.

13. The variable aperture apparatus according to any one of claims 1 to 12, wherein the at least one shutter blade is slidably connected to the carrier by using a sliding structure separately;
each sliding structure comprises a first guide groove and a slide pin slidably disposed in the first guide groove; and
the first guide groove is provided on the at least one shutter blade, and the slide pin is disposed on the carrier.

14. The variable aperture apparatus according to claim 13, wherein the plurality of aperture blades comprise the first aperture blade, a second guide groove is provided on the first aperture blade, the at least one shutter blade comprises the first shutter blade, the first guide groove is provided on the first shutter blade, and the slide pin passes through the first guide groove and the second guide groove, so that both the first shutter blade and the first aperture blade are slidably connected to the carrier.

15. A camera module, comprising:
the variable aperture apparatus according to any one of claims 1 to 14; and
a lens, wherein the lens is disposed on a light outlet side of the aperture hole of the variable aperture apparatus.

16. An electronic device, comprising:
the camera module according to claim 15; and
a controller, wherein the controller is electrically connected to the camera module.

17. A control method for a variable aperture apparatus, wherein the variable aperture apparatus comprises a plurality of aperture blades and a shutter blade; and
the control method comprises:
receiving a first instruction; and
controlling, according to the first instruction, the plurality of aperture blades and the shutter blade to move to a first position, and controlling the plurality of aperture blades and the shutter blade to move from the first position to a second position, wherein
the shutter blade completely blocks a light inlet hole enclosed by the plurality of aperture blades at the first position, and the shutter blade deviates from the light inlet hole enclosed by the plurality of aperture blades at the second position.

18. The control method for the variable aperture apparatus according to claim 17, wherein the control method further comprises:
receiving a second instruction; and
controlling, according to the second instruction, the plurality of aperture blades and the shutter blade to move to a target position between the first position and the second position, wherein at the target position, the light inlet hole enclosed by the plurality of aperture blades is used as a target aperture hole, and the shutter blade deviates from the target aperture hole.
